# DEMANDE DE BREVET EUROPEEN

(11) **EP 1 975 854 A1**
(43) Date de publication de la demande: **01.10.2008**
(21) Numéro de dépôt: 08005550.2
(22) Date de dépôt: 25.03.2008
(51) Int. Cl.: G06K 19/07, G06K 7/00

(54) **Procédé de couplage d'un circuit intégré sans contact à un composant NFC**

(30) Priorité: 28.03.2007 FR 0702268
(71) Demandeur: Inside Contactless, 13100 Aix en Provence (FR)
(72) Inventeur: Martin, Michel, 13840 Rognes (FR); Charrat, Bruno, 13090 Aix En Provence (FR); Borejko, Tomasz, 03-982 Warszawa (PL)
(74) Mandataire: Marchand, André

(57) **Abrégé**

L'invention concerne un procédé pour coupler un circuit intégré hôte (ICC) du type fonctionnant sans contact à un composant NFC (NFCM1) comprenant un circuit d'antenne (ACT) pour la réception et l'émission de données sans contact, le circuit intégré hôte comprenant des bornes de connexion d'antenne (TA, TB). Selon l'invention, au moins une borne de connexion d'antenne (TA, TB) du circuit intégré est reliée à une borne d'antenne (DT1, DT2) du composant NFC. Application à la réalisation d'un chipset NFC, notamment pour téléphone mobile.

## Description

La présente invention s'inscrit dans le cadre du développement et du perfectionnement de la technologie NFC (Near Field Communication).

La technologie NFC est actuellement développée par un consortium industriel regroupé sous le nom de Forum NFC (http ://www.nfc-forum.org). La technologie NFC est dérivée de la technologie RFID (Radio Frequency Identification) et utilise des composants NFC présentant une interface de communication sans contact (émission/réception de données sans contact) et plusieurs modes de fonctionnement, à savoir un mode "lecteur" (Reader Mode), un mode "émulation de carte", et un mode "device" (ou "device-to-device" soit "dispositif à dispositif"). Dans le mode lecteur, ou mode actif, le composant NFC fonctionne comme un lecteur RFID conventionnel pour accéder en lecture ou écriture à une puce RFID (carte à puce ou étiquette sans contact notamment). Il émet un champ magnétique, envoie des données par modulation de l'amplitude du champ magnétique et reçoit des données émises par rétromodulation (modulation de charge). Dans le mode émulation, ou mode passif, décrit par le brevet EP 1 327 222 au nom de la demanderesse, le composant NFC fonctionne à la manière d'un transpondeur pour dialoguer avec un lecteur ou un composant NFC dans le mode actif, et être vu par l'autre lecteur ou composant NFC comme une puce RFID. Le composant NFC dans le mode passif n'émet pas de champ magnétique, reçoit des données en démodulant un champ magnétique émis par l'autre lecteur et émet des données par rétromodulation. Dans le mode "device", plus rarement utilisé, le composant NFC est dans le mode actif pour émettre des données et dans le mode passif pour recevoir des données.

En sus de ces modes de fonctionnement, un composant NFC peut mettre en oeuvre plusieurs protocoles de communication sans contact et est par exemple capable d'échanger des données suivant ces divers protocoles, par exemple ISO 14443-A et ISO 14443-B. Chaque protocole définit une fréquence d'émission du champ magnétique, une méthode de modulation de l'amplitude du champ magnétique pour émettre des données dans le mode actif, et une méthode de rétromodulation pour émettre des données dans le mode passif. Un composant NFC peut ainsi être un dispositif multimode et multiprotocole. La demanderesse commercialise par exemple un composant NFC sous la désignation "MicroRead".

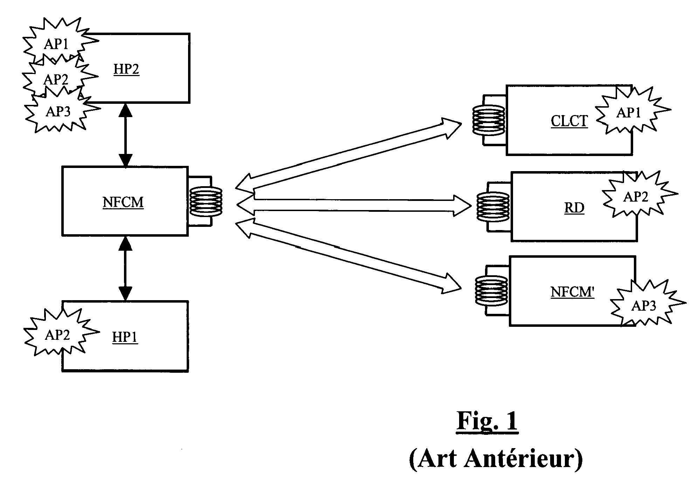

En raison de ses capacités de communication étendues, un composant NFC est destiné à être intégré dans des dispositifs portatifs tels des téléphones portables ou des PDA (Assistant Numérique Personnel). On est donc amené à réaliser un ensemble de puces ou chipset du type représenté sur la figure 1, en connectant un composant NFC désigné NFCM à au moins un processeur hôte HP1. Dans de nombreuses applications, le chipset NFC comprend également un second processeur hôte HP2, comme représenté, et parfois un troisième voire plus.

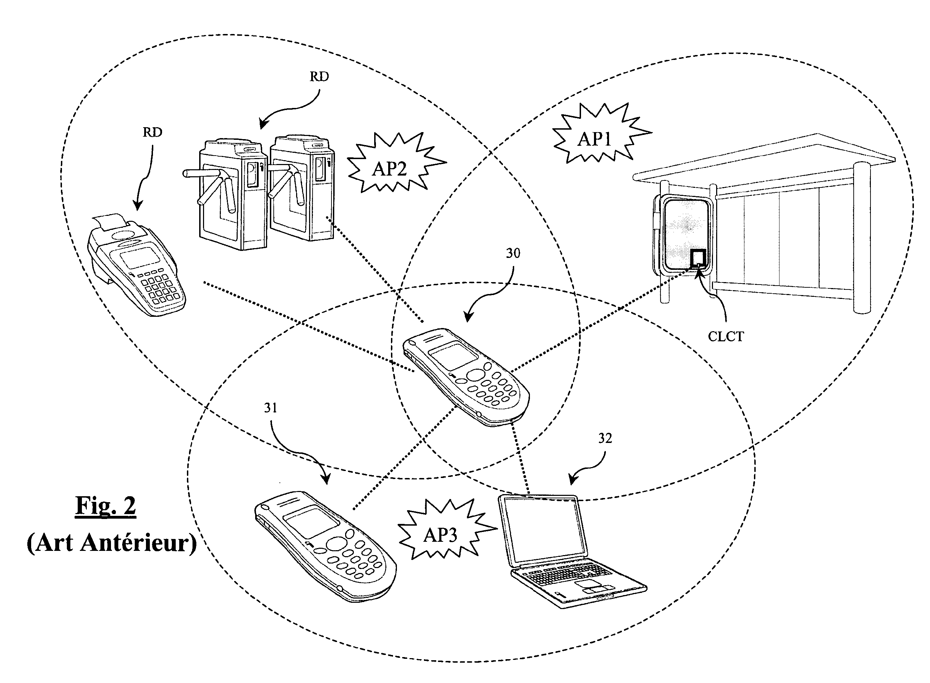

Le processeur hôte HP1 est par exemple un circuit intégré sécurisé, comme un circuit intégré de carte SIM ("Suscriber Identity Module"), et le processeur hôte HP2 est par exemple un processeur non sécurisé comme le circuit de bande de base d'un téléphone mobile ("composant" ou circuit de radiotéléphonie). Les ressources du composant NFC sont mises à la disposition des processeurs HP1, HP2 pour leur permettre de gérer des applications sans contact. De telles applications sont illustrées sur la figure 2, qui représente un téléphone mobile 30 équipé du chipset NFC de la figure 1, comprenant le composant NFC et les processeurs hôtes HP1, HP2. On distingue sur cette figure des applications de type AP1, AP2 et AP3. Dans les applications de type AP1, le composant NFC est dans le mode lecteur pour lire ou écrire un circuit intégré sans contact CLCT, par exemple une carte de visite électronique ou une étiquette publicitaire. Le téléphone mobile est dans ce cas utilisé comme un lecteur RFID. Dans les applications de type AP2, le composant NFC du téléphone 30 est dans le mode émulation de carte pour être lu par des lecteurs RD conventionnels. Il s'agit généralement d'applications au paiement ou au contrôle d'accès payant (machine de paiement, entrée de métro, etc.). Le téléphone mobile 30 est alors utilisé comme une carte à puce. Dans les applications de type AP3, le composant NFC du téléphone 30 est dans le mode "device" et dialogue avec un autre dispositif, par exemple un autre composant NFCM' embarqué dans un téléphone mobile 31 ou dans un ordinateur 32.

Les applications de type AP1 et AP3 sont généralement gérées par le processeur non sécurisé HP2, tandis que les applications de type AP2 sont le plus souvent gérées par le processeur sécurisé HP1, comme illustré sur la figure 1, car l'accès au service nécessite une identification sécurisée de l'abonné. Des applications de type AP2 gratuites et non sécurisées peuvent également être gérées par le processeur HP2, par exemple la lecture de données de type "contacts" (adresses et numéros de téléphone) dans le téléphone, etc.

Ainsi, la réalisation d'un chipset NFC nécessite de prévoir un acheminement des flux de données entre le composant NFC et chacun des processeurs hôtes HP1, HP2. Ces flux de données comprennent des données entrantes, reçues par le composant NFC au moyen de son interface de communication sans contact puis acheminées jusqu'aux processeurs hôtes, et des données sortantes, émises par les processeurs hôtes puis acheminées au composant NFC pour être émises par celui-ci au moyen de son interface de communication sans contact.

La création d'un chemin de données entre un composant NFC et un processeur hôte HP2 de type "baseband" ne pose généralement pas de problème technique car le processeur hôte, embarqué dans le téléphone mobile, dispose de moyens de communication étendus, par exemple un port de communication UART ("Universal Asynchronous Receiving Transmitting") permettant un transfert de données à haut débit.

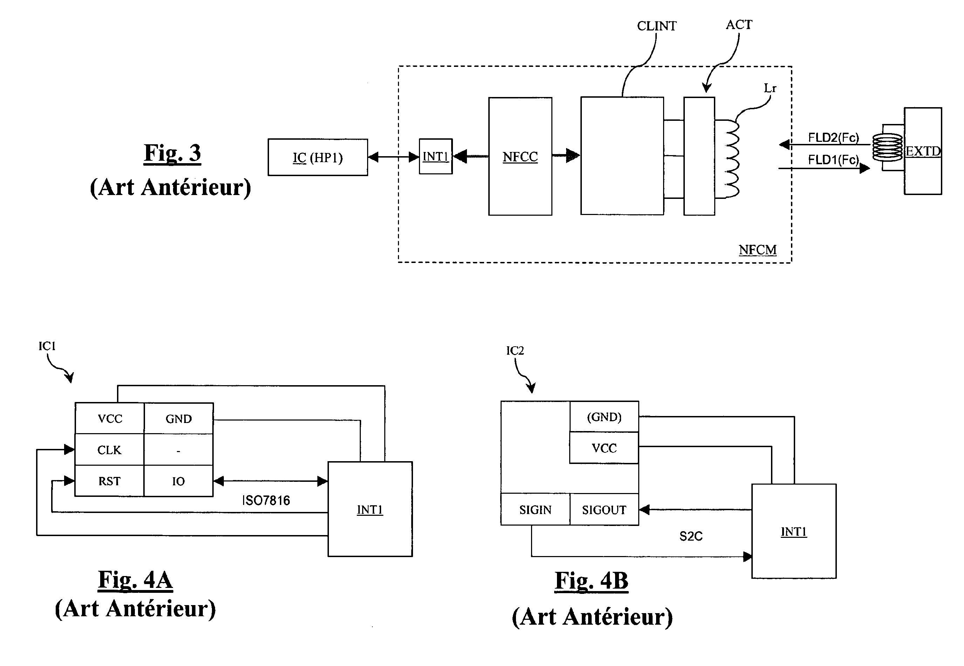

La création d'un chemin de données entre un composant NFC et un circuit intégré sécurisé IC en tant que processeur hôte HP1 est illustrée sur la figure 3, qui représente schématiquement l'architecture du composant NFCM de la figure 1 et sa connexion au circuit intégré IC.

Le composant NFCM comprend un circuit d'interface sans contact CLINT, un circuit d'antenne ACT connecté au circuit CLINT, comprenant une bobine d'antenne Lr, un processeur principal NFCC (microprocesseur ou microcontrôleur) et un circuit d'interface INT1 pour connecter le circuit intégré IC. Dans le mode actif, la bobine d'antenne du composant NFC émet un champ magnétique FLD1 de fréquence porteuse Fc à l'attention d'un dispositif externe EXTD tel un circuit intégré sans contact CLCT (fig. 1). Dans le mode passif, elle reçoit par couplage inductif un champ magnétique FLD2 de fréquence porteuse Fc émis par un dispositif externe EXTD tel un lecteur RD ou un autre composant NFCM' (fig. 1).

La figure 4A illustre la connexion du composant NFCM à un circuit intégré à contact IC1 de type ISO 7816, comprenant des plages de contact ISO 7816, à savoir VCC, GND, IO, RST, CLK (alimentation électrique, masse, entrée/sortie de données, "Reset" et horloge). Ces plages de contact, initialement conçues pour échanger des données avec un lecteur de carte via un bus ISO 7816, sont connectées ici au circuit d'interface INT1 et celui-ci est configuré pour assurer la gestion du bus ISO 7816 et la conversion des données entrantes et sortantes véhiculées par le bus.

Pour coupler des circuits intégrés sans contact à un composant NFC, on a proposé un bus de communication spécifique, appelé bus S2C, et une connexion du type illustré sur la figure 4B. Le circuit intégré sans contact IC2 représenté est connecté au moyen de contacts dédiés au circuit d'interface INT1. Le circuit INT1 est ici configuré pour assurer la conversion des données entrantes et sortantes véhiculées par le bus S2C. Le bus S2C comprend un signal 1 émis par le circuit intégré et un signal SIGOUT émis par le composant NFC. Le signal 1 véhicule l'enveloppe d'un signal de rétromodulation porteur de données, que le composant NFCM doit appliquer à son circuit d'antenne. Le signal SIGOUT est un signal oscillant qui présente une modulation par sauts de phase (modulation PSK ou "Phase Shift Keying") représentative des variations d'amplitude du champ magnétique reçu par le composant NFCM dans le mode passif et par conséquent représentative des données reçues par ce dernier.

Le bus S2C présente toutefois divers inconvénients. D'une part, il nécessite une adaptation des circuits intégrés sans contact existants par l'ajout d'un circuit d'interface S2C. Les fabricants doivent donc réaliser d'une part des lots de circuits intégrés destinés à des applications sans contact et d'autre part des lots de circuits intégrés modifiés équipés d'une interface S2C. Or, il est important de prévoir des circuits intégrés sans contact pouvant être utilisés de façon conventionnelle mais pouvant également être insérés dans un chipset NFC, afin de ne pas créer une diversité de modèles de circuits intégrés qui grèverait leur prix de revient. De plus, le bus S2C ne permet pas le transfert d'énergie. Ainsi, si le circuit intégré est purement passif, une liaison supplémentaire Vcc et GND doit être prévue pour fournir une tension d'alimentation Vcc et la masse correspondante GND, comme représenté en figure 4B.

La présente invention vise ainsi un moyen pour échanger des données entre un composant NFC et un circuit intégré sans contact en minimisant les modifications à apporter au circuit intégré, afin de rationaliser la production de circuits intégrés sans contact.

Pour atteindre cet objectif, la présente invention prévoit un procédé pour coupler un circuit intégré hôte du type fonctionnant sans contact à un composant NFC comprenant un circuit d'antenne pour la réception et l'émission de données sans contact, le circuit intégré hôte comprenant des bornes de connexion d'antenne, le procédé comprenant l'étape consistant à relier au moins une borne de connexion d'antenne du circuit intégré hôte à une borne d'antenne du composant NFC.

Selon un mode de réalisation, le procédé comprend l'étape consistant à relier au moins une borne de connexion d'antenne du circuit intégré hôte à une borne d'antenne du composant NFC par l'intermédiaire d'un interrupteur piloté par le composant NFC.

Selon un mode de réalisation, le procédé comprend l'étape consistant à relier une borne de connexion d'antenne du circuit intégré hôte à une borne d'antenne du composant NFC par l'intermédiaire d'un circuit redresseur fournissant une tension d'alimentation au circuit intégré hôte.

Selon un mode de réalisation, le procédé comprend les étapes consistant à relier une borne de connexion d'antenne du circuit intégré hôte à une borne d'antenne du composant NFC par l'intermédiaire d'un condensateur d'adaptation, et accorder le circuit d'antenne sur une fréquence de travail en tenant compte du condensateur d'adaptation.

Selon un mode de réalisation, le procédé comprend les étapes consistant à prévoir dans le composant NFC un circuit d'observation, et relier au moins une borne du circuit d'observation à une borne d'antenne du composant NFC.

Selon un mode de réalisation le procédé comprend, pour coupler le circuit intégré hôte au composant NFC et établir un chemin de données entre le circuit hôte et le composant NFC, les étapes consistant à faire appliquer par le composant NFC à son circuit d'antenne un signal d'antenne modulé en fonction de données à envoyer au circuit intégré hôte, et faire démoduler le signal d'antenne par le circuit intégré hôte pour extraire les données émises par le composant NFC.

Selon un mode de réalisation, le procédé comprend également les étapes consistant à faire moduler le signal d'antenne par le circuit intégré hôte en fonction de données à envoyer au module NFC, et faire démoduler le signal d'antenne par le composant NFC pour extraire les données émises par le circuit intégré.

Selon un mode de réalisation, pour coupler le circuit intégré hôte au composant NFC et établir un chemin de données entre le circuit hôte et un composant NFC externe comprenant un circuit d'antenne, le procédé comprend les étapes consistant à faire émettre par le composant NFC externe un signal de couplage inductif ou de couplage électrique modulé en fonction de données à envoyer au circuit intégré hôte, recevoir le signal de couplage inductif ou de couplage électrique au moyen du circuit d'antenne du composant NFC, et faire démoduler le signal d'antenne par le circuit intégré hôte pour extraire les données émises par le composant NFC externe.

Selon un mode de réalisation, le procédé comprend les étapes consistant à prévoir dans le composant NFC un circuit d'observation, faire également démoduler le signal d'antenne par le circuit d'observation, et extraire des données, et fournir les données extraites par le circuit d'observation au composant NFC.

Selon un mode de réalisation, le procédé comprend les étapes consistant à faire moduler le signal d'antenne par le circuit intégré hôte en fonction de données à envoyer au composant NFC externe, recevoir le signal de modulation au moyen du circuit d'antenne du composant NFC externe, et faire démoduler le signal de modulation par le composant NFC externe pour extraire les données émises par le circuit intégré hôte.

L'invention concerne également un chipset NFC comprenant un composant NFC comprenant un circuit d'antenne pour la réception et l'émission de données sans contact, et un circuit intégré hôte du type fonctionnant sans contact comprenant des bornes de connexion d'antenne, dans lequel au moins une borne de connexion d'antenne du circuit intégré hôte est reliée à une borne d'antenne du composant NFC.

Selon un mode de réalisation, au moins une borne de connexion d'antenne du circuit intégré hôte est reliée à une borne d'antenne du composant NFC par l'intermédiaire d'un interrupteur piloté par le composant NFC.

Selon un mode de réalisation, une borne de connexion d'antenne du circuit intégré hôte est reliée à une borne d'antenne du composant NFC par l'intermédiaire d'un circuit redresseur fournissant une tension d'alimentation au circuit intégré hôte.

Selon un mode de réalisation, une borne de connexion d'antenne du circuit intégré hôte est reliée à une borne d'antenne du composant NFC par l'intermédiaire d'un condensateur d'adaptation faisant partie du circuit d'antenne du composant NFC pour l'accord du circuit d'antenne sur une fréquence de travail.

Selon un mode de réalisation, le composant NFC comprend un circuit d'observation relié aux bornes d'antenne du composant NFC, agencé pour démoduler des données reçues par le circuit intégré hôte.

Selon un mode de réalisation, le composant NFC est configuré pour comprendre un mode de fonctionnement dans lequel il applique au circuit d'antenne un signal d'antenne modulé en fonction de données à envoyer au circuit intégré hôte, et extrait du circuit d'antenne un signal de modulation porteur de données émis par le circuit intégré hôte.

Selon un mode de réalisation, le circuit intégré hôte est configuré pour démoduler le signal d'antenne pour extraire des données émises par un composant NFC externe ou par le composant NFC.

Selon un mode de réalisation, le circuit intégré hôte est configuré pour moduler le signal d'antenne en fonction de données à envoyer à un composant NFC externe ou au composant NFC.

L'invention concerne également un objet électronique, notamment téléphone mobile ou assistant personnel, comprenant un chipset selon l'invention.

L'invention concerne également un composant NFC comprenant un circuit d'antenne pour la réception et l'émission de données sans contact, et un module d'adaptation pour coupler au composant NFC un circuit intégré hôte du type fonctionnant sans contact comprenant des bornes de connexion d'antenne, dans lequel le module d'adaptation comprend : des premières bornes connectées à des bornes d'antenne du composant NFC, des secondes bornes de connexion du circuit intégré hôte, destinées à être connectées à des bornes de connexion d'antenne du circuit intégré hôte, et une liaison électrique entre les premières et les secondes bornes.

Selon un mode de réalisation, la liaison électrique comprend des interrupteurs pilotés par le composant NFC.

Selon un mode de réalisation, la liaison électrique comprend un circuit redresseur agencé entre une première borne et une seconde borne du circuit d'adaptation, pour fournir une tension d'alimentation au circuit intégré hôte.

Selon un mode de réalisation, la liaison électrique comprend un condensateur d'adaptation agencé entre une première borne et une seconde borne du circuit d'adaptation, le condensateur d'adaptation faisant partie du circuit d'antenne pour l'accord du circuit d'antenne sur une fréquence de travail.

Selon un mode de réalisation, le composant NFC comprend un circuit d'observation relié aux premières bornes du module d'adaptation.

Selon un mode de réalisation, le circuit d'observation est configuré pour démoduler un signal d'antenne et extraire des données présentes dans le signal d'antenne.

Dans ce qui suit seront décrits des exemples de mise en oeuvre du procédé de l'invention. Ces exemples sont décrits à titre non limitatif en référence aux figures jointes parmi lesquelles:
- la figure 1 précédemment décrite représente sous forme de bloc une architecture classique de chipset NFC,
- la figure 2 précédemment décrite illustre diverses applications d'un chipset NFC intégré dans un téléphone mobile,
- la figure 3 précédemment décrite représente sous forme de bloc l'architecture classique d'un composant NFC relié à un circuit intégré hôte,
- les figures 4A, 4B précédemment décrites représentent deux modes de connexion classiques d'un circuit intégré hôte au composant NFC de la figure 3,
- la figure 5A montre un exemple de composant NFC selon l'invention, relié à un circuit intégré hôte selon le procédé de l'invention,
- la figure 5B montre un second exemple de composant NFC selon l'invention, relié à un circuit intégré hôte selon une variante du procédé de l'invention,
- la figure 5C montre un troisième exemple de composant NFC selon l'invention, relié à un circuit intégré hôte selon une autre variante du procédé de l'invention,
- la figure 6A est identique à la figure 5C et montre en traits gras des liaisons actives dans un premier mode de fonctionnement du composant NFC,
- la figure 6B est identique à la figure 5C et montre en traits gras des liaisons actives dans un second mode de fonctionnement du composant NFC,
- la figure 6C est identique à la figure 5C et montre en traits gras des liaisons actives dans un troisième mode de fonctionnement du composant NFC,
- les figures 7A, 7B, 8A, 8B, 9A, 9B, 10A, 10B représentent des signaux électriques apparaissant dans le composant NFC lorsque des données sont reçues ou émises par le circuit intégré hôte,
- les figures 11A, 11B représentent deux architectures classiques de circuits intégrés sans contact,
- les figures 12A, 12B représentent respectivement les circuits intégrés sans contact selon les figures 11A, 11B connectés au composant NFC de la figure 5C, et
- les figures 13, 14, 15 montrent d'autres exemples d'un composant NFC selon l'invention.

### Premier exemple

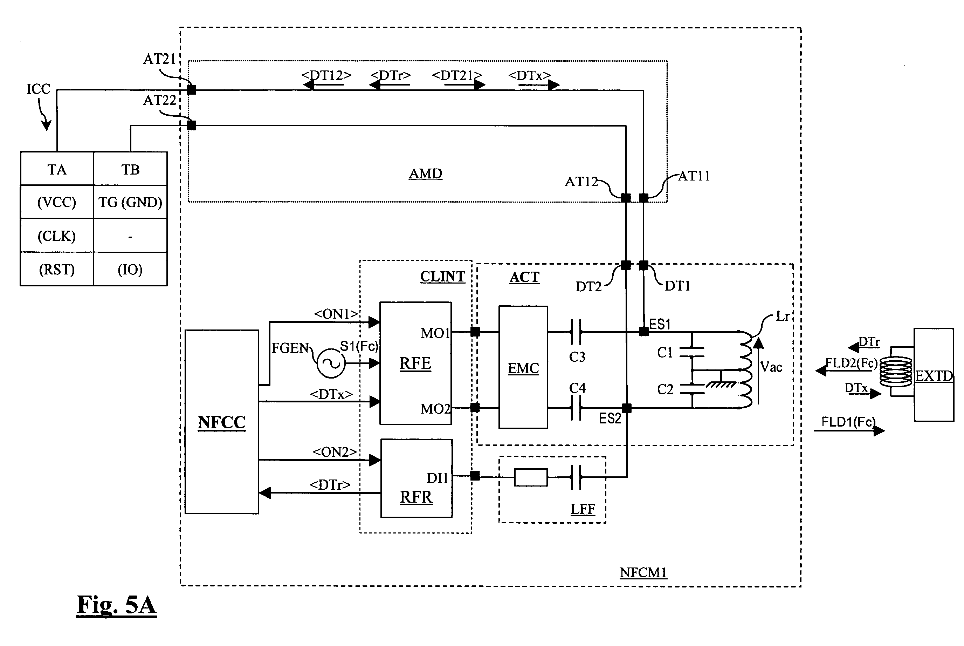

La figure 5A représente schématiquement un composant NFC désigné "NFCM1" relié à un circuit intégré sans contact ICC conformément au procédé de l'invention. Le circuit intégré ICC comprend deux bornes d'antenne TA, TB destinées à être connectées à une bobine d'antenne. Le circuit intégré ICC peut optionnellement être du type hybride (ou "combi") et comprendre également des contacts ISO 7816 (VCC, GND, CLK, RST, IO), ceux-ci n'étant toutefois pas utilisés ici pour coupler le circuit ICC au composant NFCC en raison des inconvénients du bus ISO 7816 mentionnés plus haut.

Le composant NFCM1 comprend classiquement un contrôleur NFCC, un circuit d'interface CLINT et un circuit d'antenne ACT accordé sur une fréquence de travail Fc comportant une bobine d'antenne Lr. Le circuit d'interface CLINT est connecté au circuit d'antenne ACT et forme avec celui-ci l'interface de communication sans contact du composant (ou interface d'émission/réception de données sans contact). Le circuit CLINT comprend un émetteur RF désigné "RFE" et un récepteur RF désigné "RFR".

Le circuit d'antenne est par exemple de type symétrique, la bobine Lr comprenant un point milieu à la masse. Deux condensateurs en série C1, C2 sont agencés aux bornes de la bobine et présentent également un point milieu à la masse. Le circuit d'antenne comprend également ici un premier condensateur série C3 (passe-haut) reliant une borne de la bobine Lr à une sortie de modulation MO1 de l'émetteur RFE par l'intermédiaire d'un circuit EMC (circuit de compatibilité électromagnétique). Un second condensateur série C4 relie l'autre borne de la bobine Lr à une sortie de modulation MO2 de l'émetteur RFE, également par l'intermédiaire du circuit EMC.

Le circuit d'antenne pourrait également être non symétrique. Dans ce cas la borne inférieure de la bobine d'antenne serait connectée à la masse et les condensateurs C2, C4 ne seraient plus nécessaire (le circuit d'antenne correspondrait à la moitié du circuit d'antenne représenté, par rapport à la masse).

Le composant NFCM1 comprend également un filtre passe-bas LFF comprenant, par exemple, un condensateur en série avec une résistance. Le filtre LFF relie une borne de la bobine Lr à une entrée de démodulation DI1 du récepteur RFR.

Lorsque le composant NFC est dans le mode actif et émet un champ magnétique FLD1(Fc), un oscillateur FGEN fournit à l'émetteur RFE un signal d'excitation S1(Fc) de fréquence Fc, par exemple 13,56 MHz, correspondant à la fréquence d'accord du circuit d'antenne. L'émetteur RFE est activé par un signal ON1 fourni par le contrôleur NFCC et le récepteur RFR activé par un signal ON2 fourni par le contrôleur NFCC. Le contrôleur NFCC fournit également des données à émettre DTx à l'émetteur RFE. Celui-ci applique le signal d'excitation S1 sous forme modulée en fonction des données DTx au circuit d'antenne ACT, via ses sorties de modulation MO1, MO2. La modulation peut être faite de diverses manières connues, par exemple une modulation d'amplitude de type "ISO-A" ou "ISO-B" (ISO14443-A et ISO14443-B). Un signal de rétromodulation envoyé par un dispositif externe EXTD et porteur de données DTr est par ailleurs reçu par le récepteur RFR, après suppression de la porteuse Fc par le filtre LFF. Le récepteur RFR décode ce signal de rétromodulation et communique au contrôleur NFCC les données DTr reçues par rétromodulation. Le dispositif externe est par exemple un circuit intégré sans contact ou un autre composant NFC fonctionnant dans le mode passif (appelé aussi mode "émulation de carte").

Dans le mode de réalisation représenté sur la figure A, le circuit d'antenne comprend deux bornes DT1, DT2 connectées respectivement à la première et à la seconde borne de la bobine Lr. Les bornes DT1, DT2 sont connectées respectivement à des bornes AT11, AT12 d'un module d'adaptation AMD comprenant deux autres bornes AT21, AT22. Dans ce mode de réalisation, la borne AT11 est reliée à la borne AT21 par un premier conducteur électrique (fil, piste de circuit imprimé, etc.) et la borne AT12 est reliée à la borne AT22 par un autre conducteur électrique.

Le circuit intégré ICC est dépourvu de bobine d'antenne et est relié électriquement au composant NFCM1 au moyen de ses bornes d'antenne TA et TB, la borne TA étant reliée à la borne AT21 du module d'adaptation et la borne TB étant reliée à la borne AT22.

Cette liaison peut comprendre un connecteur intermédiaire, non représenté ici, par exemple des lames de contact qui s'appuient sur les bornes d'antenne TA, TB du circuit intégré. Par ailleurs les "bornes d'antenne" peuvent être des plages de contact spécifiquement prévues pour la mise en oeuvre de l'invention et reliées électriquement à des plages de connexion d'antenne initialement prévues dans le circuit intégré, la modification à apporter à un circuit intégré pour réaliser de telles plages de contact additionnelles étant mineure.

Ainsi, le circuit intégré ICC est relié au circuit d'antenne du composant NFCM1, et plus particulièrement la partie du circuit d'antenne comprenant la bobine Lr et les condensateurs C1, C2, et ce circuit d'antenne du composant NFC forme également le circuit d'antenne du circuit intégré ICC.

Dans le mode passif, le composant NFCM1 n'applique pas le signal d'excitation S1(Fc) au circuit d'antenne ACT et un champ magnétique externe FLD2(Fc) est fourni par un dispositif externe EXTD, par exemple un autre composant NFC dans le mode actif. Le contrôleur NFCC désactive l'émetteur RFE (ON1=0) et récepteur RFR (ON2=0) et laisse agir le circuit intégré hôte pour assurer la communication de données dans le mode passif avec le dispositif externe, en utilisant une partie de son circuit d'antenne ACT comme circuit d'antenne du circuit intégré hôte.

Que le composant NFCM1 soit dans le mode actif ou dans le mode passif, une tension alternative Vac apparaît aux bornes de la bobine Lr, typiquement une tension de 10 à 30 Volt crête. Le circuit d'antenne étant ici symétrique l'apparition de cette tension se traduit par l'apparition d'un signal d'antenne ES1, ES2 sur chacune des bornes DT1, DT2. L'amplitude de chaque composante est égale à la moitié de celle de la tension Vac relativement à la masse, soit par exemple 5 à 15 Volt crête. Avec un circuit d'antenne non symétrique, seule l'une des bornes TA, TB recevrait le signal d'antenne et l'autre borne serait reliée à la masse du composant.

### Deuxième exemple

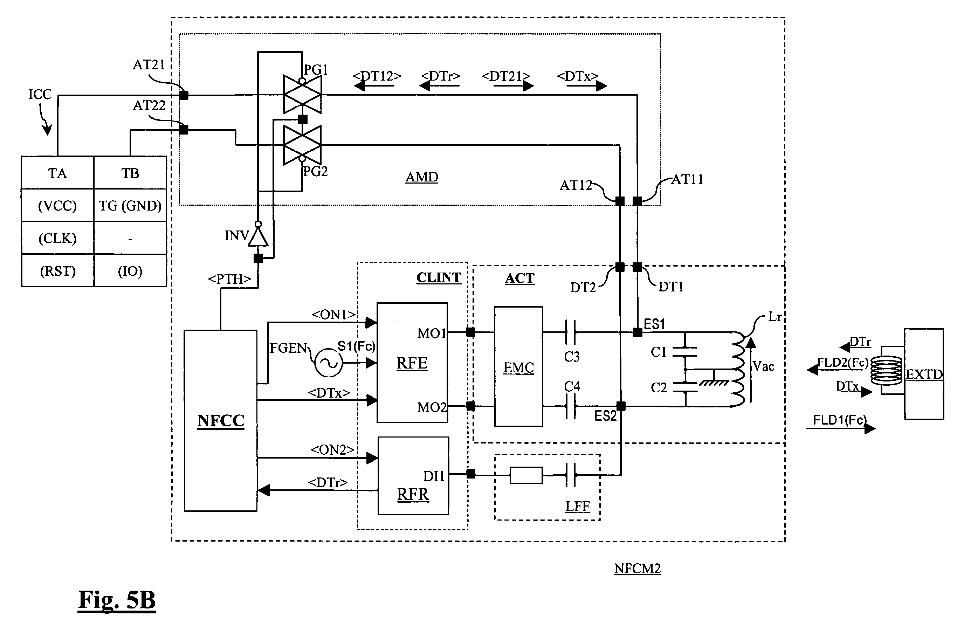

Le composant NFCM2 représenté sur la figure 5B diffère du composant NFCM1 de la figure 5A en ce que le module d'adaptation AMD comprend deux interrupteurs PG1, PG2. L'interrupteur PG1 est agencé entre les bornes AT11 et AT21 du module AMD et l'interrupteur PG2 agencé entre les bornes AT12 et AT22. Les interrupteurs PG1, PG2 sont contrôlés par un signal PTH ("PassThrough") fourni par le contrôleur NFCC. Les interrupteurs peuvent être du type normalement ouvert (bloqué) ou normalement fermé (passant). On suppose par exemple que ces interrupteurs sont du type normalement ouvert et que le signal PTH doit être porté à une valeur active, par exemple "1" (valeur logique correspondant à la tension d'alimentation du contrôleur NFCC), pour les mettre dans l'état passant.

Les interrupteurs PG1, PG2 dans l'état bloqué isolent le circuit intégré ICC du circuit d'antenne ACT. Cette configuration est utilisée lorsque le composant NFCM2 est dans le mode actif et émet un champ magnétique FLD1(Fc) pour dialoguer avec un dispositif externe EXTD qui est dans le mode passif.

Les interrupteurs PG1, PG2 dans l'état passant permettent d'établir une liaison de données entre le circuit intégré ICC et un dispositif externe EXTD dans le mode actif. Une telle liaison de données comprend des données sortantes DTx émises par le circuit intégré et des données entrantes DTr émises par le dispositif externe. Les interrupteurs PG1, PG2 dans l'état passant permettent également d'établir une liaison de données entre le contrôleur NFCC et le circuit intégré ICC. Une telle liaison de données comprend des données DT12 émises par le contrôleur NFCC à l'attention du circuit intégré hôte et des données DT21 émises par le circuit intégré hôte à l'attention du contrôleur NFCC.

Les interrupteurs PG1, PG2 dans l'état passant doivent de préférence laisser passer les signaux d'antenne ES1, ES2 sans chute de tension rédhibitoire. Des interrupteurs classiques de type "PassGate", représentés sur la figure 5B, conviennent bien à la présente invention. De tels interrupteurs comprennent une combinaison de transistors NMOS et PMOS. Ils reçoivent le signal PTH sur leur borne d'entrée non inverseuse (borne de grille de transistor NMOS) et le signal PTH inversé sur leur borne d'entrée inverseuse (borne de grille de transistor PMOS). Le signal PTH inversé est ici fourni par une porte inverseuse INV. D'autres variantes de réalisation des interrupteurs PG1, PG2 peuvent être prévues ainsi que divers moyens de commande. Par exemple, le signal PTH peut être survolté au moyen d'une pompe de charges afin de fournir une tension de contrôle élevée visant à empêcher l'écrêtage éventuel des signaux d'antenne ES1, ES2 dans les interrupteurs.

### Troisième exemple

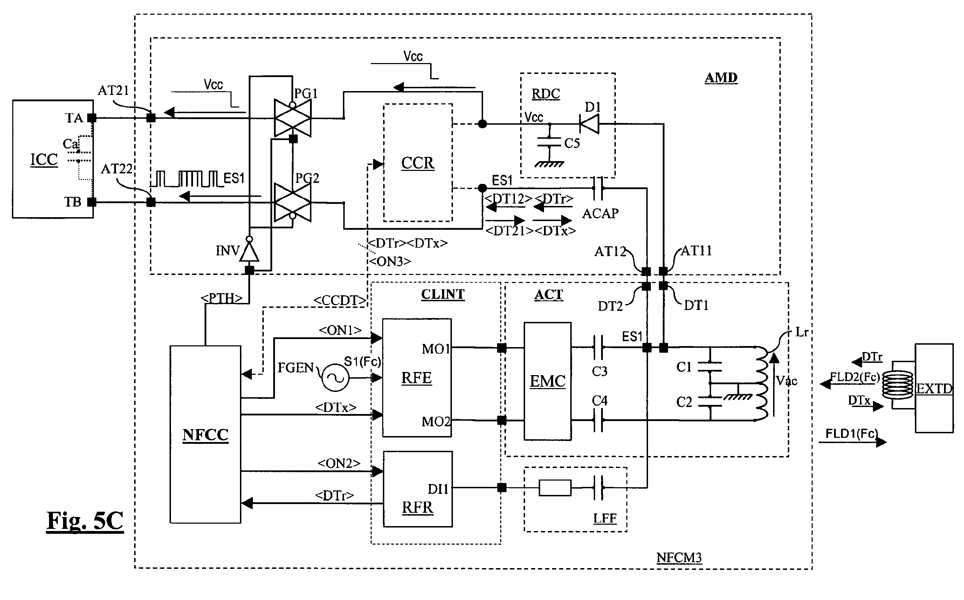

Le composant NFCM3 représenté sur la figure 5C diffère du composant NFCM2 de la figure 5B en ce que le module d'adaptation AMD comprend un circuit redresseur monoalternance RDC agencé sur le chemin du signal d'antenne ES1, entre la borne AT11 et la borne AT21. Le circuit redresseur RDC comprend par exemple une diode série D1 et un condensateur en parallèle C5, ayant sa cathode connectée à la masse. La sortie du circuit redresseur fournit une tension Vcc formant la tension d'alimentation du circuit intégré hôte. La tension Vcc est ainsi appliquée à la borne TA de celui-ci via l'interrupteur PG1 et la borne AT21 du module d'adaptation.

Dans ce mode de réalisation, la borne AT12 du module d'adaptation peut être connectée d'un coté ou de l'autre du circuit d'antenne, pour envoyer le signal d'antenne ES1 ou le signal d'antenne ES2 sur la borne TB du circuit intégré ICC. De même, la borne AT11 peut recevoir le signal ES2 au lieu du signal ES1 pour produire la tension Vcc. Tel que montré sur la figure, c'est le signal ES1 qui est ici appliqué sur la borne AT12. Par ailleurs si le circuit d'antenne n'était pas symétrique, la borne de la bobine d'antenne opposée à celle connectée à la masse serait utilisée pour prélever le signal d'antenne et pour fournir la tension Vcc.

Le module d'adaptation AMD comprend également un condensateur d'adaptation ACAP agencé sur le chemin du signal d'antenne ES1, entre la borne AT12 et la borne AT22 du circuit d'adaptation. De préférence, le condensateur ACAP fait partie intégrante du circuit d'antenne ACT, ce qui signifie que le circuit d'antenne est accordé sur la fréquence de travail Fc en tenant compte de ce condensateur. Le condensateur ACAP permet de supprimer sinon de limiter l'effet sur la fréquence d'accord du circuit d'antenne ACT d'une capacité d'accord Ca présente entre les bornes TA et TB du circuit intégré ICC. Le condensateur ACAP permet par exemple de coupler au composant NFCM3 des circuits intégré hôtes de fabricants différents, ayant des capacité d'accord Ca différentes, sans que cela affecte de façon très sensible la fréquence d'accord du circuit d'antenne ACT et donc sans affecter ses performances de façon rédhibitoire, notamment la valeur crête de la tension Vac et la distance de communication.

Le circuit d'adaptation AMD comprend également ici un circuit d'émission réception de données CCR connecté aux bornes AT21, AT22 du module d'adaptation, ici en parallèle avec les bornes TA, TB du circuit intégré hôte. La connexion du circuit CCR aux bornes AT21, AT22 est de préférence faite en amont des interrupteurs PG1, PG2 afin de pouvoir utiliser ce circuit en lieu et place du circuit intégré lorsque les interrupteurs PG1, PG2 sont ouverts. Le circuit CCR est de même structure générale que le circuit ICC et comporte des circuits de démodulation et de rétromodulation pour recevoir ou émettre des données par l'intermédiaire du circuit d'antenne ACT. Il est contrôlé par un signal d'activation ON3 émis par le contrôleur NFCC et reste dans l'état inactif quand ce signal est par exemple à 0. Une fois activé, il fournit au contrôleur NFCC des données DTr reçues via le circuit d'antenne ACT, et reçoit du contrôleur des données DTx à émettre par rétromodulation au moyen du circuit d'antenne ACT.

Le circuit CCR peut être utilisé comme circuit de communication dans le mode passif, ce qui évite de prévoir, dans le circuit d'interface CLINT, une circuiterie de gestion du mode passif (mode émulation de carte). Avantageusement, le circuit CCR peut également être utilisé comme circuit d'observation ou "circuit espion" lorsque le circuit intégré hôte échange des données DTx, DTr avec un dispositif externe EXTD.

Le composant NFCM3, après connexion du circuit intégré ICC, peut ainsi présenter divers modes de fonctionnement.

### Exemple de modes de fonctionnement

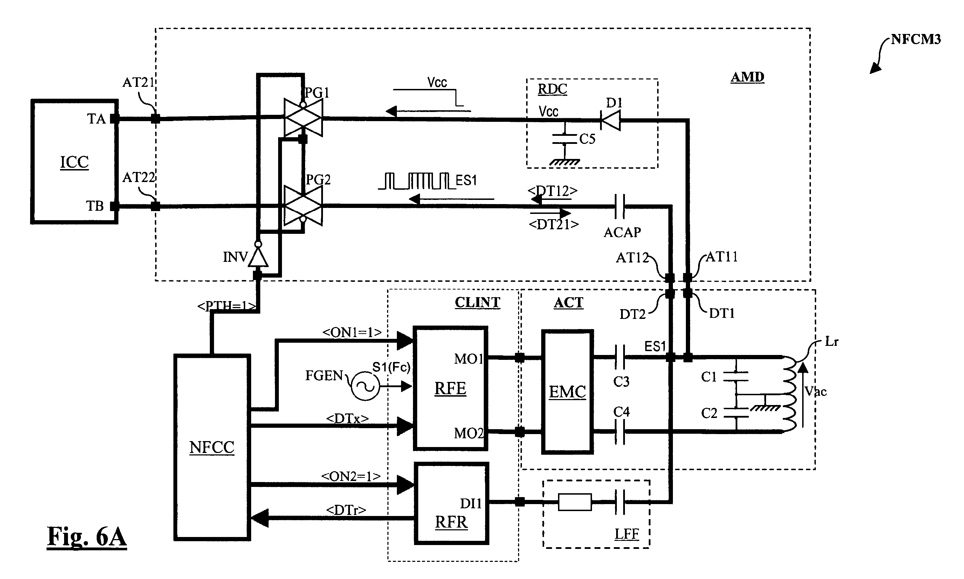

Des exemples son montrés sur les figures 6A à 6C qui sont identiques à la figure 5C en ce qui concerne la structure du circuit d'adaptation AMD.

### Mode M1 : Communication entre le contrôleur NFCC et le circuit intégré hôte ICC

Ce mode de fonctionnement est illustré sur la figure 6A. Les liaisons actives sont représentées en gras. Les interrupteurs PG1, PG2 sont fermés (PTH=1). Le contrôleur NFCC active l'émetteur RFE (ON1=1) et le récepteur (ON2=1) ainsi que le générateur FGEN. Le contrôleur NFCC émet des données DT12 à l'attention du circuit intégré ICC comme s'il émettait des données à un dispositif externe par couplage inductif. Le circuit intégré hôte reçoit ces données via le signal d'antenne ES1 (le signal ES1 étant également redressé pour fournir la tension d'alimentation Vcc). Le signal d'antenne ES1 est modulé d'une manière convenant aux caractéristiques du circuit intégré. Si celui-ci est par exemple compatible ISO-A ou ISO-B, une modulation d'amplitude de type ISO-A ou ISO-B est appliquée au circuit d'antenne par l'émetteur RFE pour transmettre des données DT12.

De son côté, le circuit intégré hôte envoie des données DT21 par rétromodulation (modulation de charge). Le signal de rétromodulation est extrait par le filtre LFF et est décodé par le récepteur RFR, qui fournit ensuite les données DT21 au contrôleur NFCC.

Ainsi, une communication entre le circuit intégré hôte et le contrôleur NFCC est établie comme si le circuit intégré hôte était pourvu de sa propre bobine d'antenne et comme si cette bobine d'antenne était reliée par couplage inductif à la bobine d'antenne Lr du composant NFCM3. A noter que le circuit CCR n'est pas utilisé dans ce mode de fonctionnement et n'est pas représenté sur la figure. Toutefois, l'activation du circuit CCR pourrait permettre au contrôleur NFCC de vérifier que les données qu'il envoie au circuit intégré hôte sont retransmises par le module d'adaptation AMD, ce qui permettrait par exemple de détecter une défaillance du redresseur RDC ou du condensateur de liaison ACAP.

### Mode M2 : Communication entre le circuit intégré hôte ICC et un dispositif externe EXTD, le contrôleur NFCC étant dans le mode transparent

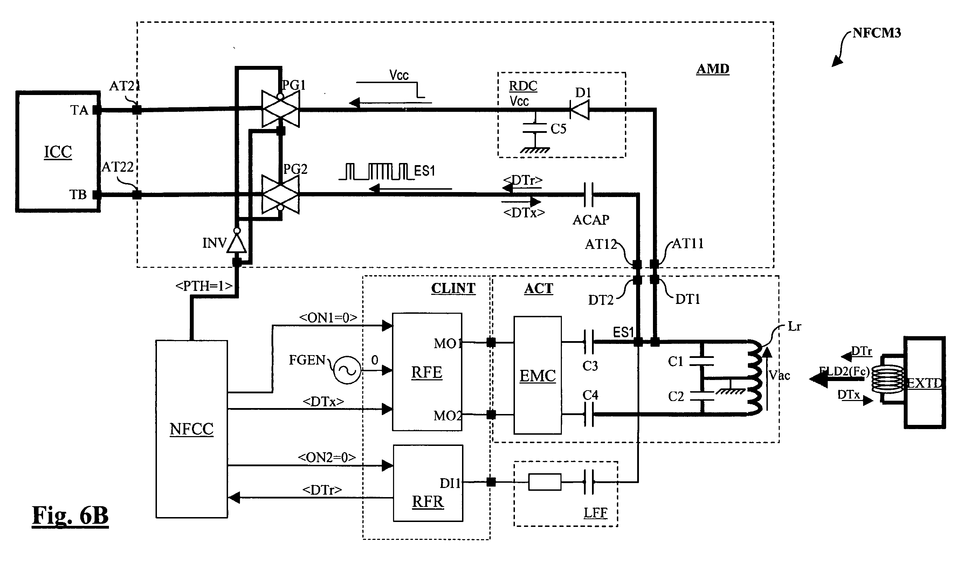

Ce mode de fonctionnement est illustré sur la figure 6B. Les liaisons actives du module NFCM3 sont représentées en caractères gras. Le dispositif externe EXTD est ici dans le mode actif et émet un champ magnétique FLD2. Les interrupteurs PG1, PG2 sont fermés (PTH=1). Le contrôleur NFCC désactive l'émetteur RFE (ON1=0), le récepteur (ON2=0) ainsi que le générateur FGEN (S1(Fc)=0). Le dispositif externe EXTD émet des données DTr à l'attention du circuit intégré hôte comme s'il émettait des données à un circuit intégré sans contact conventionnel équipé de sa propre bobine d'antenne. La modulation du champ magnétique, se retrouvant dans la modulation du signal d'antenne ES1, est adaptée aux caractéristiques du circuit intégré. Par exemple si celui-ci est compatible ISO-A ou ISO-B, une modulation d'amplitude de type ISO-A ou ISO-B est assurée par le dispositif EXTD pour transmettre les données DTr. Comme précédemment le circuit intégré hôte reçoit les données via le signal d'antenne ES1 et le signal ES1 est également redressé pour fournir la tension d'alimentation Vcc.

Le circuit intégré hôte renvoie des données DTx au dispositif externe EXTD par rétromodulation (modulation de charge). Le signal de rétromodulation est extrait par le dispositif EXTD de son propre signal d'antenne, et est décodé pour retrouver les données DTx. Ainsi, une communication entre le circuit intégré hôte et le dispositif externe EXTD est établie comme si le circuit intégré hôte était pourvu de sa propre bobine d'antenne, sous réserve bien entendu que le circuit d'antenne ACT du module NFCM3 soit couplé avec le circuit d'antenne du dispositif EXTD. Le circuit CCR n'est pas utilisé dans ce mode de fonctionnement et n'est pas représenté sur la figure 6B dans un souci de simplification du schéma.

Comme indiqué plus haut, le signal d'antenne ES1 peut aussi être utilisé uniquement pour véhiculer les données et le signal ES2 être utilisé pour produire la tension Vcc. Le signal d'antenne ES2 peut aussi être utilisé pour véhiculer les données et le signal ES1 être utilisé pour produire la tension Vcc. Egalement le signal ES2 peut être utilisé pour véhiculer les données et produire la tension Vcc.

### Mode M3 : Communication entre le circuit intégré ICC et un dispositif externe EXTD, le contrôleur NFCC étant dans le mode "écoute"

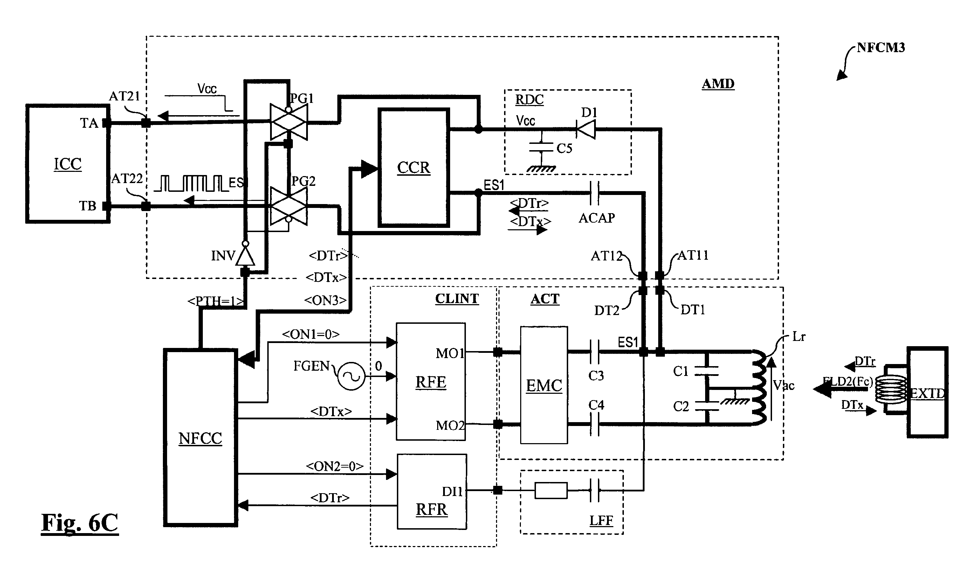

Ce mode de fonctionnement est illustré sur la figure 6C. Il est identique au mode M2 en ce qui concerne le circuit intégré hôte et le dispositif externe, et diffère de celui-ci en ce que le contrôleur NFCC active le circuit CCR (ON3=1). Ce dernier démodule les données entrantes DTr ou sortantes DTx et les communique au contrôleur NFCC (mode écoute passive), sans perturber la communication. Le contrôleur NFCC peut toutefois décider de mettre fin à une communication en utilisant le circuit CCR pour émettre une donnée ou un signal de fin de communication à la place du circuit intégré hôte (mode écoute active).

### Mode M4 : composant NFCM3 dans le mode passif sans intervention du circuit intégré hôte

Ce mode de réalisation non illustré sur les figures ne concerne pas le circuit intégré hôte et consiste simplement à utiliser le circuit CCR pour gérer le mode passif du composant NFCM3. Les interrupteurs PG1, PG2 sont ouverts et le circuit CCR se substitue au circuit intégré hôte pour recevoir des données DTr émises par le dispositif externe EXTD et envoyer des données DTx au dispositif externe, par rétromodulation. Ce mode de fonctionnement peut être utilisé pour gérer des applications non sécurisées, tandis que les modes de fonctionnement M2 ou M3 peuvent être utilisés pour gérer des applications sécurisées (si le circuit intégré hôte est un circuit sécurisé).

### Mode M5 : composant NFCM3 dans le mode actif

Ce mode de réalisation non illustré sur les figures est le mode actif classique du composant NFCM3. Les interrupteurs PG1, PG2 sont ouverts et le circuit intégré hôte est déconnecté du circuit d'antenne ACT. Le circuit CCR n'est également pas utilisé dans ce mode de communication.

### Exemples de formes d'ondes

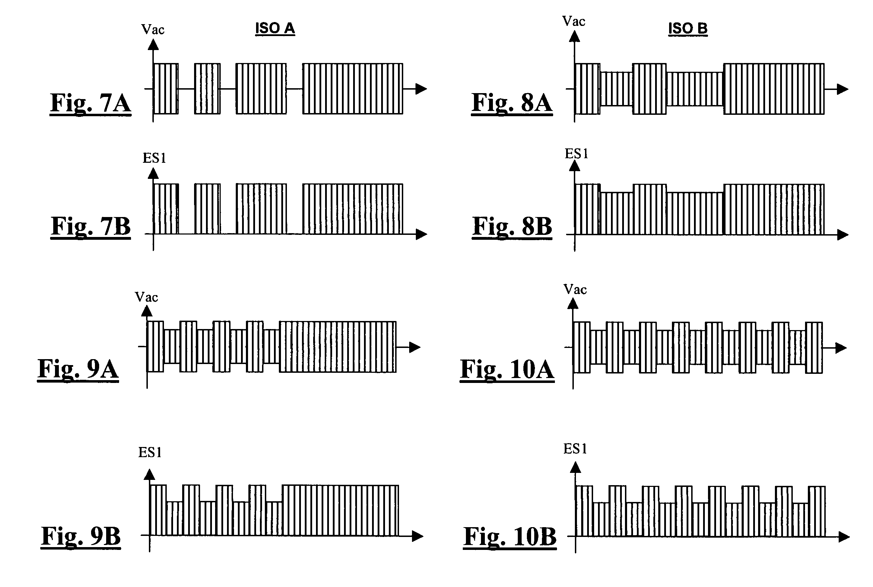

Les figures 7A et 8A représentent la tension induite Vac apparaissant dans le circuit d'antenne du composant NFCM3 dans le mode de fonctionnement passif lorsque des données DTr sont reçues, le dispositif externe EXTD émettant un champ magnétique FLD2. Ce mode passif peut être le mode M2 ou le mode M3 avec intervention du circuit intégré hôte, ou encore le mode M4 sans intervention du circuit intégré hôte. La figure 7A illustre une modulation d'amplitude de type ISO-A et la figure 8A une modulation d'amplitude de type ISO-B. Sur la figure 7A, les données DTr sont reçues selon un codage dit "Miller modifié" et avec une modulation à 100% de l'amplitude de la tension induite Vac. La valeur crête de la tension Vac dépend de la distance de communication (distance entre le composant NFCM3 et le dispositif externe EXTD). Sur la figure 8A, les données DTr sont reçues selon un codage NRZ ("Non Return to Zero") et une modulation à 10% de la tension Vac, la valeur crête de la tension Vac étant identique.

Les figures 7B et 8B représentent le signal d'antenne correspondant ES1 transmis au circuit intégré hôte ou au circuit CCR (Cf. fig. 6A-6C). Le signal d'antenne ES1 est l'image de la tension Vac mais ne présente que des alternances positives, étant mesuré par rapport à la masse (point milieu des condensateurs C3, C4 du circuit d'antenne).

Les figures 9A et 10A représentent la tension induite Vac apparaissant dans le circuit d'antenne du composant NFCM3 dans le mode de fonctionnement passif, lorsque des données DTx sont émises par rétromodulation. La figure 9A illustre une rétromodulation de type ISO-A et la figure 10A une rétromodulation de type ISO-B. Sur la figure 9A, la tension Vac est modulée en amplitude par un signal de sous-porteuse Fsc généré par le circuit intégré hôte ou le circuit CCR, un "1" étant codé par une alternance Fsc/0 (modulation avec la sous-porteuse/pas de modulation) et un "0" étant codé par une alternance inverse 0/Fsc (pas de modulation/modulation avec la sous-porteuse) ou inversement. A noter qu'un seul bit de donnée est représenté sur la figure 9A, dans un souci de simplicité. Sur la figure 10A, la tension Vac est modulée en amplitude en permanence par le signal de sous-porteuse Fsc, les transitions entre un "1" et un "0" étant repérées par des sauts de phase ou des absences de sauts de phase (modulation PSK ou "Phase Shift Keying"). Un seul bit de donnée est également représenté sur la figure 10A.

Les figures 9B et 10B représentent le signal d'antenne correspondant ES1 transmis au circuit intégré hôte ou au circuit CCR (Cf. fig. 6A-6C). Le signal d'antenne ES1 est l'image de la tension Vac et présente également la rétromodulation que le circuit intégré hôte ou le circuit CCR lui impose.

### Exemples d'architectures de circuits intégrés hôtes

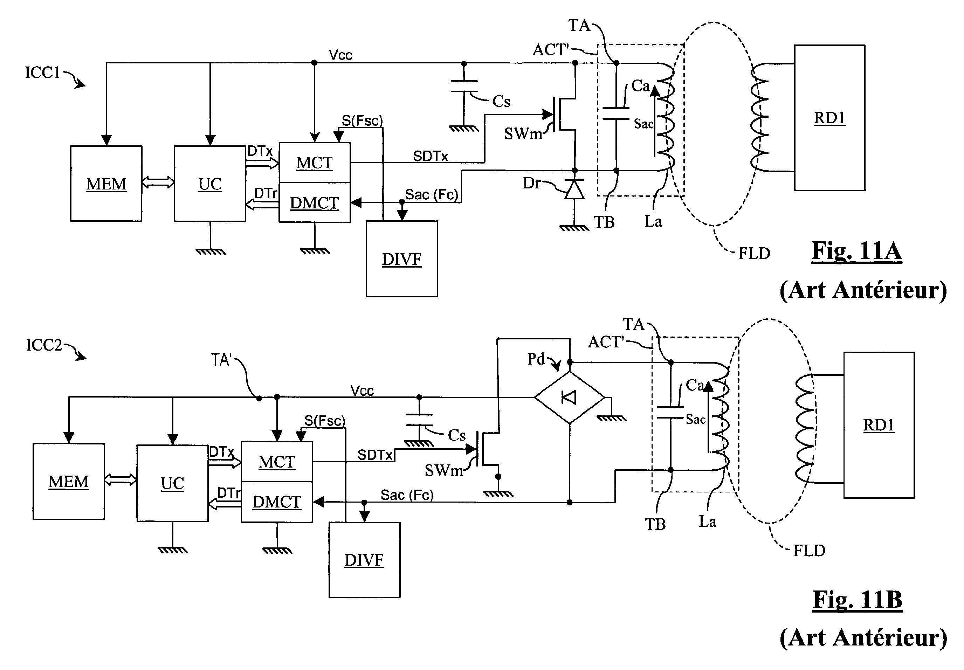

Les figures 11A, 11B représentent des circuits intégrés classiques ICC1, ICC2 de type passif alimentés par couplage inductif. Les conditions d'utilisation représentées ici sont classiques, les circuits intégrés étant mis en présence d'un champ magnétique alternatif FLD émis par un lecteur RD1.

Les circuits intégrés ICC1, ICC2 comprennent chacun un circuit d'antenne ACT' comprenant une bobine d'antenne La et une capacité d'accord Ca en parallèle, pour accorder le circuit d'antenne au voisinage de la fréquence de travail Fc. La capacité Ca est généralement intégrée sur le substrat semi-conducteur des circuits intégrés tandis que la bobine d'antenne La est un élément externe connecté aux bornes d'antenne TA, TB de chaque circuit intégré. En présence du champ magnétique FLD, un signal d'antenne alternatif Sac de fréquence Fc apparaît dans le circuit d'antenne.

Chaque circuit intégré comprend en outre un interrupteur de rétromodulation SWm (par exemple un transistor interrupteur de type MOS), un circuit modulateur MCT, un circuit démodulateur DMCT, une unité centrale UC (séquenceur à logique câblée ou microprocesseur) et une mémoire MEM.

La mémoire MEM contient un ou plusieurs programmes d'application et reçoit des données d'application. L'unité centrale UC fournit des données sortantes DTx au circuit MCT qui applique à une borne de contrôle de l'interrupteur SWm, par exemple la grille du transistor MOS, un signal SDTx porteur de données DTx. L'interrupteur SWm est connecté aux bornes d'antenne TA, TB et sa fermeture (étant passant) provoque un court-circuit partiel aux bornes du circuit d'antenne (court-circuit avec résistance série, par exemple la résistance intrinsèque du transistor MOS) provoquant l'apparition d'un signal de rétromodulation (modulation de charge) dans le circuit d'antenne, au rythme du signal porteur de données SDTx. Selon les normes ISO-A et ISO-B, le signal SDTx est modulé par un signal de sous-porteuse Fsc oscillant à une fréquence Fsc inférieure à la fréquence Fc du signal d'antenne Sac. Le signal S(Fsc) est fourni au circuit MCT par un diviseur de fréquence DIVF recevant le signal d'antenne Sac.

Le circuit intégré ICC1 se distingue du circuit intégré ICC2 en ce qu'il comprend une diode Dr pour le redressement monoalternance du signal d'antenne Sac, tandis que le circuit intégré ICC2 comprend un pont de diodes Pd pour le redressement bialternance du signal d'antenne Sac. Dans le circuit intégré ICC1, la diode Dr est connectée en inverse entre la borne d'antenne TB et la masse du circuit intégré. Une tension d'alimentation Vcc apparaît sur la borne TA, par redressement monoalternance, et est lissée par un condensateur Cs connecté entre la borne TA et la masse du circuit intégré. Dans le circuit intégré ICC2, le pont de diodes Pd comprend une première borne connectée à la borne d'antenne TA, une seconde borne connectée à la borne d'antenne TB, une troisième borne connectée à la masse du circuit intégré ICC2 et une quatrième borne connectée à un condensateur de lissage Cs et fournissant la tension Vcc d'alimentation du circuit intégré.

Dans chaque circuit intégré ICC1, ICC2, le signal d'antenne Sac est présent sur la borne d'antenne TB et celle-ci est ainsi reliée électriquement au circuit démodulateur DMCT pour l'extraction des données entrantes DTr, lesquelles sont ensuite fournies à l'unité centrale UC.

### Compatibilité des circuits intégrés ICC1, ICC2

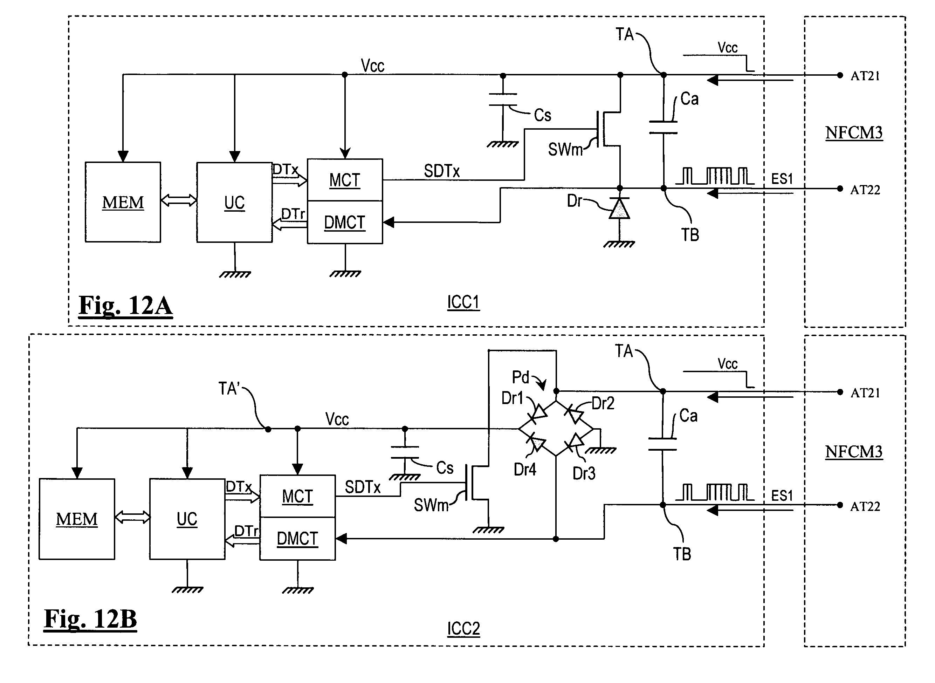

La compatibilité des circuits intégrés ICC1, ICC2 des figures 11A et 11B avec le composant NFCM3 peut être vérifiée en se référant aux figures 12A, 12B. Ces figures représentent respectivement les circuits intégrés ICC1 et ICC2 connectés au composant NFCM3 de la figure 5C, représenté ici sous la forme d'un bloc. Ainsi, la borne d'antenne TA est connectée à la borne AT21 du composant NFCM3 (borne du module d'adaptation) et la borne d'antenne TB est connectée à la borne AT22 du composant NFCM3.

Sur la figure 12A, il apparaît que la tension Vcc fournie par le composant NFCM3 sur la borne d'antenne TA va directement dans la ligne d'alimentation du circuit intégré ICC1. Par ailleurs, la diode Dr est polarisée en inverse et ne fait pas obstacle à l'application du signal d'antenne ES1 à l'entrée du circuit démodulateur DMCT du circuit intégré ICC1. Des essais et simulations ont montré que les potentiels de masse respectifs du composant NFCM3 et du circuit intégré ICC1 s'équilibrent à travers la circuiterie du circuit intégré (unité centrale UC, circuits MCT, DMCT, mémoire MEM, etc.).

Sur la figure 12B, il apparaît également que la tension Vcc fournie par le composant NFCM3 sur la borne d'antenne TA va dans la ligne d'alimentation du circuit intégré ICC2 par l'intermédiaire d'une diode Dr1 du pont de diodes Pd, qui est passante. Par ailleurs des diodes Dr2 et Dr4 du pont de diodes sont polarisées en inverse et ne font pas obstacle à l'application du signal ES1 à l'entrée du circuit démodulateur DMCT du circuit intégré ICC2. Des essais et simulations ont également montré que les potentiels de masse respectifs du composant NFCM3 et du circuit intégré ICC2 s'équilibrent à travers la circuiterie du circuit intégré et qu'une diode Dr3 du pont de diodes contribue à cet équilibrage.

Il est ainsi démontré ici qu'un circuit intégré sans contact classique peut être connecté au circuit d'antenne d'un composant NFC en tant que circuit intégré hôte afin, d'une part, d'établir une communication entre le composant NFC et le circuit intégré hôte et, d'autre part, de permettre au circuit intégré hôte de communiquer avec un dispositif extérieur en utilisant le circuit d'antenne du composant NFC comme son propre circuit d'antenne. Au cours d'une telle communication, le composant NFC peut optionnellement espionner les données reçues ou émises par le circuit intégré hôte et peut même intervenir dans la communication (mode écoute active) comme cela a été indiqué plus haut.

### Autres exemples de réalisation

La présente invention est susceptible de diverses autres variantes de réalisation.

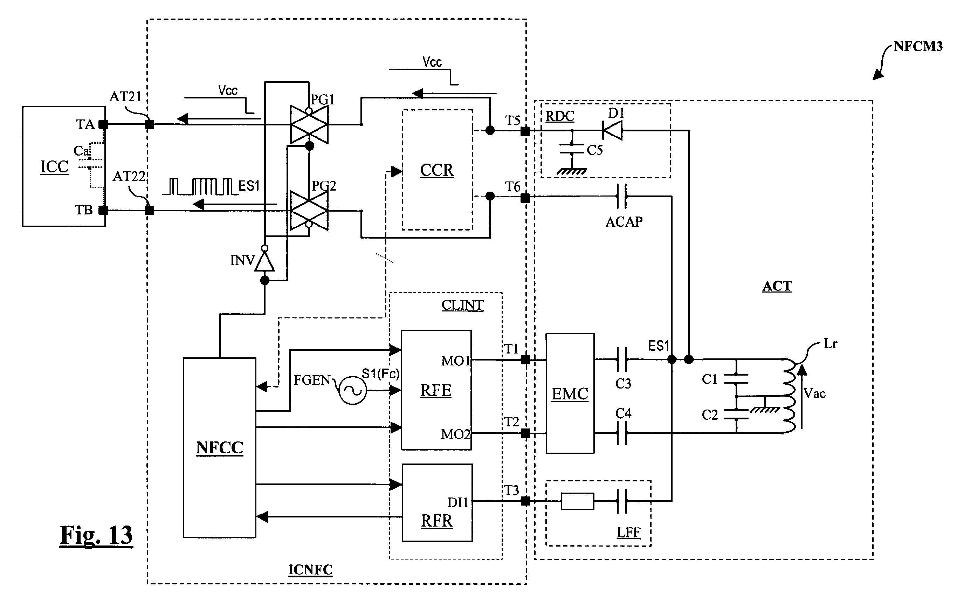

Notamment, sur les figures 5A à 5C, la représentation en traits pointillés des limites du module AMD est conceptuelle, pour faire ressortir les fonctionnalités des groupes d'éléments décrits. En pratique, certains éléments du module d'adaptation peuvent être agencés sur des supports différents. Par exemple, sur la figure 13, le composant NFCM3 est réalisé sous forme de circuit intégré ICNFC dans lequel sont intégrés le contrôleur NFCC, le circuit CLINT, le circuit de surveillance CCR et les interrupteurs PG1, PG2. Les autres éléments du circuit d'adaptation, à savoir la diode D1 et le condensateur C5 du circuit redresseur RDC, ainsi que le condensateur d'adaptation ACAP sont montés sur une plaquette de circuit imprimé (ou autre support d'interconnexion) recevant les composants du circuit d'antenne ACT. Le montage de ces composants peut être réalisé par l'intermédiaire de bornes de fixation permettant leur retrait ou leur montage ultérieur par l'utilisateur final, et permettant également le remplacement de la diode D1 et du condensateur ACAP par de simples fils conducteurs ("straps"). Le circuit intégré ICNFC comprend les bornes AT21, AT22 décrites plus haut et des bornes de connexion T1 à T6. La borne T1 relie la sortie de modulation MO1 de l'émetteur RFE au condensateur C3 et au circuit EMC, la borne T2 relie la sortie de modulation MO2 de l'émetteur RFE au condensateur C4 et au circuit EMC, la borne T3 relie l'entrée DI1 du récepteur RFR au filtre LFF, la borne T5 relie l'interrupteur PG1 et le circuit de surveillance CCR au circuit RDC, la borne T6 relie l'interrupteur PG2 et le circuit de surveillance CCR au condensateur ACAP.

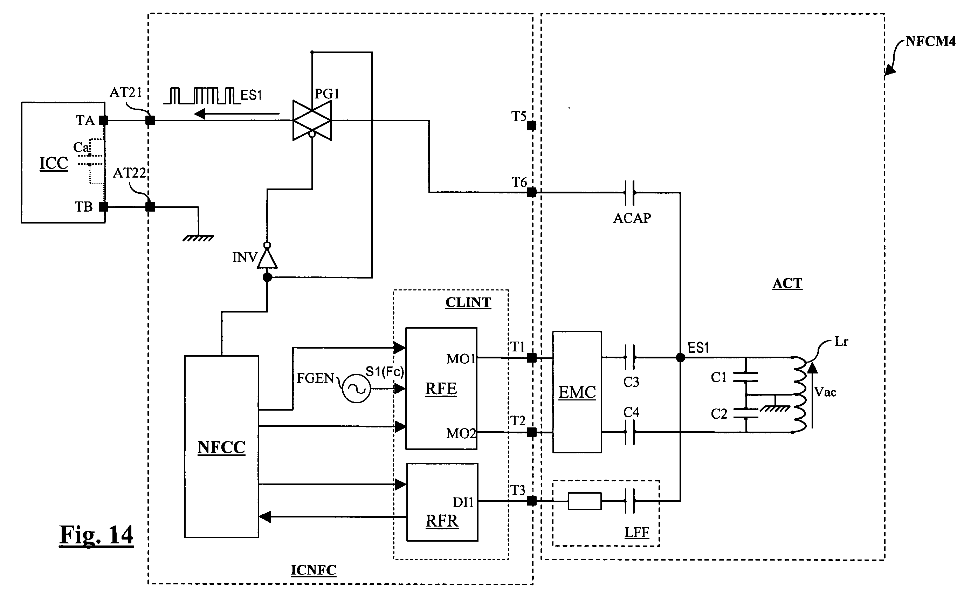

Par ailleurs le redressement du signal d'antenne ES1 par le circuit RDC, pour fournir la tension Vcc, n'est pas obligatoire. La figure 14 montre un composant NFCM4 ne comprenant que l'interrupteur PG1 amenant le signal d'antenne ES1 sur la borne TA du circuit intégré hôte ICC. L'interrupteur PG2, la borne T5 et le circuit de surveillance CCR sont supprimés ou non utilisés. La borne AT22, reliée à la borne TB du circuit intégré hôte ICC, est connectée à la masse du composant NFCM4 afin que le circuit intégré hôte ICC et le composant NFCM4 aient une référence de potentiel commune (cette référence de potentiel étant implicite lorsque la tension Vcc est appliquée au circuit intégré hôte).

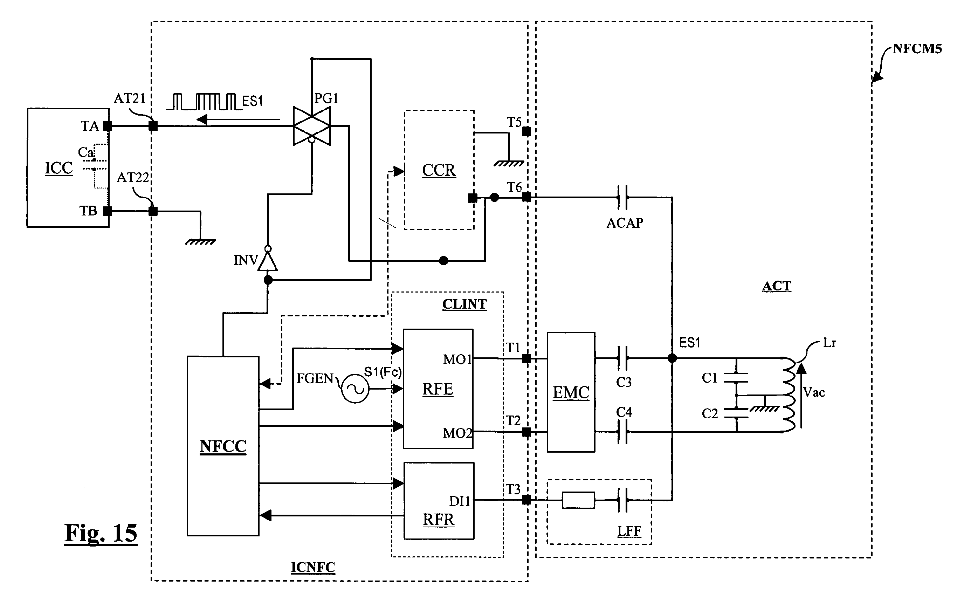

Comme autre exemple, la figure 15 représente un composant NFCM5 qui diffère seulement du composant NFCM4 en ce que le circuit CCR est conservé et est relié à la borne T6 pour recevoir le signal d'antenne ES1, la borne AT22 étant de nouveau connectée à la masse.

De façon générale les moyens d'adaptation précédemment décrits, tel le redresseur RDC sont des éléments optionnels de l'invention visant à permettre la connexion au composant NFC d'un circuit intégré sans contact classique (fig. 11A, 11B) qui n'a pas été conçu pour une telle connexion. A l'avenir, des circuits intégrés de structure appropriée pourraient être conçus pour s'adapter au circuit d'antenne d'un composant NFC sans nécessiter la mise en oeuvre d'un module d'adaptation dans le composant NFC. Les interrupteurs PG1, PG2 pourraient eux-mêmes être incorporés dans le circuit intégré hôte. Une borne supplémentaire pourrait être prévue dans les circuits intégrés pour contrôler les interrupteurs. Ces interrupteurs pourraient même être supprimés en prévoyant une borne de désactivation du circuit intégré hôte. Par ailleurs une borne de masse spécifique du circuit intégré hôte pourrait également être connectée à une borne de masse du composant NFC.

Enfin la mise en oeuvre de l'invention n'est pas limitée à la structure de circuit d'antenne ACT du composant NFC telle que décrite plus haut. Il est à la portée de l'homme de l'art de prévoir des circuits d'adaptation et/ou des structures de circuits intégrés adaptés aux autres structures de circuits d'antenne utilisées dans l'industrie, notamment des structures d'antenne conçues pour des fréquences UHF au lieu de fréquences RF ainsi que des structures d'antenne fonctionnant par couplage électrique au lieu de fonctionner par couplage inductif.

Un chipset selon l'invention est susceptible de diverses applications, notamment aux téléphones mobiles et aux assistants personnels (PDA), et de façon générale tout objet électronique portable ou non et tout appareil informatique comprenant un chipset NFC.

## Revendications

1. Procédé pour coupler un circuit intégré hôte (ICC, ICC1, ICC2) du type fonctionnant sans contact à un composant NFC (NFCM1-NFCM3) comprenant un circuit d'antenne (ACT) pour la réception et l'émission de données sans contact, le circuit intégré hôte comprenant des bornes de connexion d'antenne (TA, TB), **caractérisé en ce qu'**il comprend l'étape consistant à relier au moins une borne de connexion d'antenne (TA, TB) du circuit intégré hôte à une borne d'antenne (DT1, DT2) du composant NFC.

2. Procédé selon la revendication 1, comprenant l'étape consistant à relier au moins une borne de connexion d'antenne (TA, TB) du circuit intégré hôte à une borne d'antenne (DT1, DT2) du composant NFC par l'intermédiaire d'un interrupteur (PG1, PG2) piloté par le composant NFC.

3. Procédé selon l'une des revendications 1 et 2, comprenant l'étape consistant à relier une borne de connexion d'antenne (TA) du circuit intégré hôte à une borne d'antenne (DT1) du composant NFC par l'intermédiaire d'un circuit redresseur (RDC, D1, C5) fournissant une tension d'alimentation (Vcc) au circuit intégré hôte.

4. Procédé selon l'une des revendications 1 à 3, comprenant les étapes consistant à :
- relier une borne de connexion d'antenne (TA, TB) du circuit intégré hôte à une borne d'antenne (DT1, DT2) du composant NFC par l'intermédiaire d'un condensateur d'adaptation (ACAP), et
- accorder le circuit d'antenne (ACT) sur une fréquence de travail (Fc) en tenant compte du condensateur d'adaptation.

5. Procédé selon l'une des revendications 1 à 4, comprenant les étapes consistant à :
- prévoir dans le composant NFC un circuit d'observation (CCR), et
- relier au moins une borne du circuit d'observation (CCR) à une borne d'antenne (DT1, DT2) du composant NFC.

6. Procédé selon l'une des revendications 1 à 5, pour coupler le circuit intégré hôte au composant NFC et établir un chemin de données entre le circuit hôte et le composant NFC, comprenant les étapes consistant à :
- faire appliquer par le composant NFC à son circuit d'antenne (ACT) un signal d'antenne (ES1, ES2) modulé en fonction de données à envoyer au circuit intégré hôte, et
- faire démoduler le signal d'antenne par le circuit intégré hôte pour extraire les données émises par le composant NFC.

7. Procédé selon la revendication 6, comprenant également les étapes consistant à :
- faire moduler le signal d'antenne par le circuit intégré hôte en fonction de données à envoyer au module NFC, et
- faire démoduler le signal d'antenne par le composant NFC pour extraire les données émises par le circuit intégré.

8. Procédé selon l'une des revendications 1 à 7, pour coupler le circuit intégré hôte au composant NFC et établir un chemin de données entre le circuit hôte et un composant NFC externe (EXTD) comprenant un circuit d'antenne, comprenant les étapes consistant à :
- faire émettre par le composant NFC externe un signal (FLD2) de couplage inductif ou de couplage électrique modulé en fonction de données (DTr) à envoyer au circuit intégré hôte,
- recevoir le signal de couplage inductif ou de couplage électrique au moyen du circuit d'antenne (ACT) du composant NFC, et
- faire démoduler le signal d'antenne (ES1, ES2) par le circuit intégré hôte pour extraire les données (DTr) émises par le composant NFC externe.

9. Procédé selon la revendication 8, comprenant les étapes consistant à :
- prévoir dans le composant NFC un circuit d'observation (CCR), et
- faire également démoduler le signal d'antenne (ES1, ES2) par le circuit d'observation, et extraire des données, et
- fournir les données extraites par le circuit d'observation au composant NFC.

10. Procédé selon l'une des revendications 8 et 9, comprenant également les étapes consistant à :
- faire moduler le signal d'antenne (ES1, ES2) par le circuit intégré hôte en fonction de données (DTx) à envoyer au composant NFC externe,
- recevoir le signal de modulation au moyen du circuit d'antenne du composant NFC externe, et
- faire démoduler le signal de modulation par le composant NFC externe pour extraire les données émises par le circuit intégré hôte.

11. Chipset NFC comprenant un composant NFC comprenant un circuit d'antenne (ACT) pour la réception et l'émission de données sans contact, et un circuit intégré hôte du type fonctionnant sans contact comprenant des bornes de connexion d'antenne (TA, TB), **caractérisé en ce qu'**au moins une borne de connexion d'antenne (TA, TB) du circuit intégré hôte est reliée à une borne d'antenne (DT1, DT2) du composant NFC.

12. Chipset selon la revendication 11, dans lequel au moins une borne de connexion d'antenne (TA, TB) du circuit intégré hôte est reliée à une borne d'antenne (DT1, DT2) du composant NFC par l'intermédiaire d'un interrupteur (PG1, PG2) piloté par le composant NFC.

13. Chipset selon l'une des revendications 11 et 12, dans lequel une borne de connexion d'antenne (TA) du circuit intégré hôte est reliée à une borne d'antenne (DT1) du composant NFC par l'intermédiaire d'un circuit redresseur (RDC, D1, C5) fournissant une tension d'alimentation (Vcc) au circuit intégré hôte.

14. Chipset selon l'une des revendications 11 à 13, dans lequel une borne de connexion d'antenne (TA, TB) du circuit intégré hôte est reliée à une borne d'antenne (DT1, DT2) du composant NFC par l'intermédiaire d'un condensateur d'adaptation (ACAP) faisant partie du circuit d'antenne (ACT) du composant NFC pour l'accord du circuit d'antenne sur une fréquence de travail (Fc).

15. Chipset selon l'une des revendications 11 à 14, dans lequel le composant NFC comprend un circuit d'observation (CCR) relié aux bornes d'antenne (DT1, DT2) du composant NFC, agencé pour démoduler des données reçues par le circuit intégré hôte.

16. Chipset selon l'une des revendications 11 à 15, dans lequel le composant NFC est configuré pour comprendre un mode de fonctionnement (M1) dans lequel il applique au circuit d'antenne (ACT) un signal d'antenne (ES1, ES2) modulé en fonction de données (DT12) à envoyer au circuit intégré hôte, et extrait du circuit d'antenne un signal de modulation porteur de données (DT21) émis par le circuit intégré hôte.

17. Chipset selon l'une des revendications 11 à 16, dans lequel, le circuit intégré hôte est configuré pour démoduler le signal d'antenne (ES1, ES2) pour extraire des données émises par un composant NFC externe (EXTD) ou par le composant NFC.

18. Chipset selon l'une des revendications 11 à 17, dans lequel le circuit intégré hôte est configuré pour moduler le signal d'antenne en fonction de données à envoyer à un composant NFC externe (EXTD) ou au composant NFC.

19. Objet électronique, notamment téléphone mobile ou assistant personnel, comprenant un chipset selon l'une des revendications 11 à 18.

20. Composant NFC comprenant un circuit d'antenne (ACT) pour la réception et l'émission de données sans contact, et un module d'adaptation (AMD) pour coupler au composant NFC un circuit intégré hôte du type fonctionnant sans contact comprenant des bornes de connexion d'antenne (TA, TB),
**caractérisé en ce** le module d'adaptation (AMD) comprend :
- des premières bornes (AT11, AT12) connectées à des bornes d'antenne (DT1, DT2) du composant NFC,
- des secondes bornes (AT21, AT22) de connexion du circuit intégré hôte (ICC), destinées à être connectées à des bornes de connexion d'antenne (TA, TB) du circuit intégré hôte, et
- une liaison électrique entre les premières et les secondes bornes.

21. Composant NFC selon la revendication 20, dans lequel la liaison électrique comprend des interrupteurs (PG1, PG2) pilotés par le composant NFC.

22. Composant NFC selon l'une des revendications 20 ou 21, dans lequel la liaison électrique comprend un circuit redresseur (RDC, D1, C5) agencé entre une première borne (AT11) et une seconde borne (AT21) du circuit d'adaptation, pour fournir une tension d'alimentation (Vcc) au circuit intégré hôte.

23. Composant NFC selon l'une des revendications 20 à 22, dans lequel la liaison électrique comprend un condensateur d'adaptation (ACAP) agencé entre une première borne (AT12) et une seconde borne (AT22) du circuit d'adaptation, le condensateur d'adaptation faisant partie du circuit d'antenne (ACT) pour l'accord du circuit d'antenne sur une fréquence de travail.

24. Composant NFC selon l'une des revendications 20 à 23, dans lequel le composant NFC comprend un circuit d'observation (CCR) relié aux premières bornes (AT11, AT12) du module d'adaptation (AMD).

25. Composant NFC selon la revendication 24, dans lequel le circuit d'observation est configuré pour démoduler un signal d'antenne (ES1, ES2) et extraire des données présentes dans le signal d'antenne.
